# EUROPEAN PATENT APPLICATION

(11) **EP 4 304 249 A1**
(43) Date of publication of application: **10.01.2024**
(21) Application number: 22762998.7
(22) Date of filing: 17.02.2022
(51) Int. Cl.: H04W 36/04, H04W 4/44, H04W 4/46, H04W 88/04

(54) **RELAY NODE AND BASE STATION**

(30) Priority: 02.03.2021 JP 2021032727
(71) Applicant: DENSO CORPORATION, Kariya-city, Aichi 448-8661 (JP); TOYOTA JIDOSHA KABUSHIKI KAISHA, Toyota-shi Aichi 471-8571 (JP)
(72) Inventor: TAKADA, Terufumi, Kariya-city, Aichi.pref. 448-8661 (JP)
(74) Representative: TBK
(86) International application number: PCT/JP2022/006391
(87) International publication number: WO 2022/185942

(57) **Abstract**

A relay node according to an aspect of the present disclosure includes: a first communication processing unit configured to communicate with a first base station via a Uu interface as a user equipment; and a second communication processing unit configured to communicate with one or more user equipments via a Uu interface as a second base station. The first communication processing unit is configured to communicate with the first base station via an inter-base station interface as the second base station.

## Description

### CROSS-REFERENCE TO RELATED APPLICATIONS

This application is based on and claims the benefit of priority from Japanese Patent Application No. 2021-032727, filed on March 2, 2021, the entire content of which is incorporated herein by reference.

### Technical Field

The present disclosure relates to a relay node and a base station.

### Background Art

Mobile communication technologies have been proposed and standardized as technical specifications (TSs) in 3rd Generation Partnership Project (3GPP). Currently in particular, the 5th generation (5G) technology has been proposed and standardized.

For example, according to NPL 1 and NPL 2, a relay mounted on a vehicle has been studied, and the relay is referred to as a mobile base station relay (MBSR) and/or a vehicle mounted relay. According to NPL 1, the mobile base station relay communicates with a donor base station via a Uu interface and communicates with a user equipment (UE) via a Uu interface.

NPL 1 describes in particular that a handover of a LTE between the donor base station and the relay may occur.

### Citation List

### Non Patent Literature

NPL 1: 3GPP TR 22.839 V0.1.0 (2020-11)
NPL 2: 3GPP SA WG1 Meeting #91-e, S1-203292, E-meeting, August 24 - September 2, 2020, Qualcomm Incorporated, "New SID: Study on vehicle-mounted relays"

### Summary of the Invention

The inventor has revealed an issue that, as a relay described in NPL 1 only communicates with a donor base station via a Uu interface as a LTE, it is not possible for the relay and the donor base station to perform a normal handover procedure for a handover of a UE between the relay and the donor base station.

An object of the present disclosure is to provide a relay node and a base station that make it possible to perform a handover procedure for a handover of a LTE between the base station and the relay.

A relay node according to an aspect of the present disclosure includes: a first communication processing unit configured to communicate with a first base station via a Uu interface as a user equipment; and a second communication processing unit configured to communicate with one or more user equipments via a Uu interface as a second base station. The first communication processing unit is configured to communicate with the first base station via an inter-base station interface as the second base station.

A first base station according to an aspect of the present disclosure includes a communication processing unit configured to communicate with a relay node that communicates with the first base station via a Uu interface as a user equipment and communicates with one or more user equipments via a Uu interface as a second base station. The communication processing unit is configured to communicate with the relay node operating as the user equipment via a Uu interface and communicate with the relay node operating as the second base station via an inter-base station interface.

According to the present disclosure, it is possible to perform a handover procedure for a handover of a UE between a base station and a relay. Note that the present disclosure may yield another advantageous effect instead of this advantageous effect or in addition to this advantageous effect.

### Brief Description of Drawings

FIG. 1 is a diagram illustrating an example of a schematic configuration of a system according to embodiments of the present disclosure.
FIG. 2 is a diagram illustrating specific examples of a relay node and a user equipment according to embodiments of the present disclosure.
FIG. 3 is a diagram illustrating an example of architecture including the system according to embodiments of the present disclosure.
FIG. 4 is a block diagram illustrating an example of a schematic functional configuration of a relay node according to embodiments of the present disclosure.
FIG. 5 is a block diagram illustrating an example of a schematic hardware configuration of the relay node according to embodiments of the present disclosure.
FIG. 6 is a block diagram illustrating an example of a schematic functional configuration of a base station according to embodiments of the present disclosure.
FIG. 7 is a block diagram illustrating an example of a schematic hardware configuration of the base station according to embodiments of the present disclosure.
FIG. 8 is a flowchart for explaining a first example of a schematic flow of an Xn setup procedure according to embodiments of the present disclosure.
FIG. 9 is a flowchart for explaining a second example of the schematic flow of the Xn setup procedure according to embodiments of the present disclosure.
FIG. 10 is a diagram illustrating an example of a user plane protocol for a Uu interface between a relay node and a UE according to embodiments of the present disclosure.
FIG. 11 is a diagram illustrating an example of a control plane protocol for the Uu interface between a relay node and a UE according to embodiments of the present disclosure.
FIG. 12 is a diagram illustrating an example of a user plane protocol for a Uu interface between a relay node and a base station according to embodiments of the present disclosure.
FIG. 13 is a diagram illustrating an example of a control plane protocol for the Uu interface between a relay node and a base station according to embodiments of the present disclosure.
FIG. 14 is a diagram illustrating an example of a user plane protocol for an Xn interface between a relay node and a base station according to embodiments of the present disclosure.
FIG. 15 is a diagram illustrating an example of a control plane protocol for the Xn interface between a relay node and a base station according to embodiments of the present disclosure.
FIG. 16 is a diagram for explaining a first example of a handover according to embodiments of the present disclosure.
FIG. 17 is a flowchart for explaining a first example of a handover procedure according to embodiments of the present disclosure.
FIG. 18 is a diagram for explaining a second example of a handover according to embodiments of the present disclosure.
FIG. 19 is a flowchart for explaining a second example of a handover procedure according to embodiments of the present disclosure.

### Description of Embodiments

Hereinafter, embodiments of the present disclosure will be described in detail with reference to the appended drawings. In the present specification and the drawings, elements to which similar descriptions are applicable are denoted with the same reference signs, thereby omitting duplicate descriptions.

Descriptions will be given in the following order:
1. Configuration of System
2. Configuration of Relay Node
3. Configuration of Base Station
4. Operation Examples
5. Modification Examples

### <1. Configuration of System>

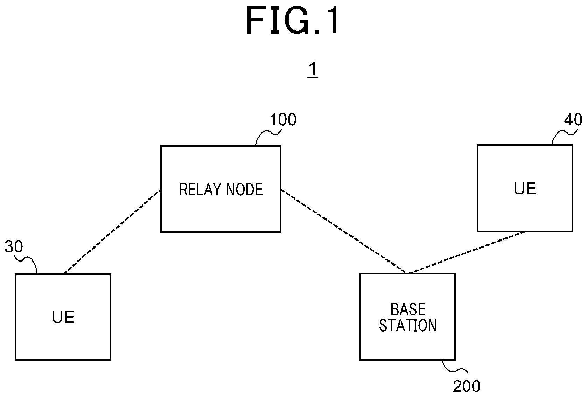

An example of a configuration of a system 1 according to embodiments of the present disclosure will be described with reference to FIGS. 1 to 3.

Referring to FIG. 1, the system 1 includes a relay node 100, a base station 200, a LTE 30, and a LTE 40.

For example, the system 1 is a system compliant with TSs in 3GPP. More specifically, for example, the system 1 is a system compliant with the TSs of 5G or new radio (NR).

### (1) Relay Node 100

The relay node 100 relays data and control information between a base station and a LTE.

For example, the relay node 100 operates as a UE. Specifically, for example, the relay node 100 is connected to the base station 200 as a LTE and communicates with the base station 200 via a Uu interface when being located within the coverage area of the base station 200.

For example, the relay node 100 also operates as a base station. Specifically, for example, one or more UEs are connected to the relay node 100 and the relay node 100 communicates with the one or more UEs via a Uu interface as a base station. Referring to the example of FIG. 1, the UE 30 is connected to the relay node 100 and the relay node 100 communicates with the UE 30 via a Uu interface as a base station. Note that the base station 200 may be referred to as a first base station and the relay node 100 (or a base station function of the relay node 100) may be referred to as a second base station. In this case, the relay node 100 communicates with the UE 30 as the second base station.

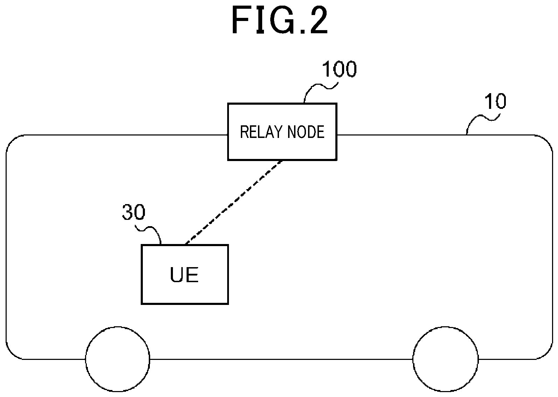

For example, the relay node 100 is a mobile relay node. More specifically, for example, the relay node 100 is an apparatus mountable on a mobile object. For example, the mobile object is a vehicle and the relay node 100 is an onboard apparatus. As an example, the relay node 100 is an electronic control unit (ECU). Referring to the example of FIG. 2, for example, the relay node 100 is mounted on a vehicle 10 and the UE 30 is located in the vehicle 10. For example, in this way, the relay node 100 is not installed at a specific location, but moves.

The relay node 100 may be referred to as a mobile base station relay (MBSR) or a vehicle mounted relay.

### (2) Base Station 200

The base station 200 is a node in a radio access network (RAN) and communicates, via a Uu interface, with a LTE located within the coverage area of the base station 200.

Referring to the example of FIG. 1, for example, the LTE 40 is connected to the base station 200 and the base station 200 communicates with the UE 40 via a Uu interface. As described above, for example, the relay node 100 is connected to the base station 200 as a LTE and the base station 200 communicates with the relay node 100 via a Uu interface.

For example, the base station 200 is a gNB. The gNB is a node that provides NR user plane and control plane protocol terminations towards a LTE and is connected to a 5G core network (5GC) via an NG interface. Alternatively, the base station 200 may be an en-gNB. The en-gNB is a node that provides NR user plane and control plane protocol terminations toward a LTE and operates as a secondary node in E-UTRA-NR dual connectivity (EN-DC).

The base station 200 may be referred to as a donor base station. More specifically, the base station 200 may be referred to as a donor gNB.

### (3) Example of Architecture

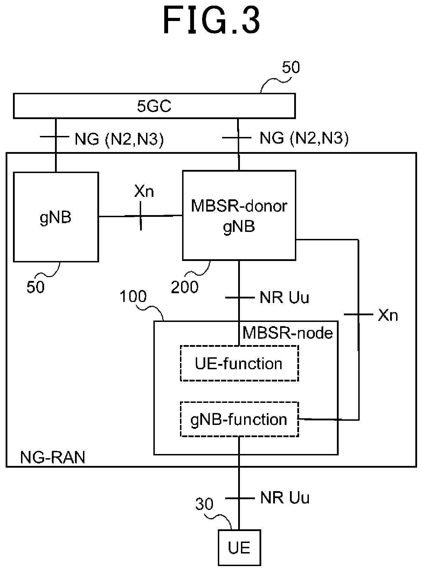

Referring to FIG. 3, an example of entire architecture that includes the system 1 is illustrated. In this example, the relay node 100 is an MBSR-node and the base station 200 is an MBSR-donor gNB. The MBSR-node (relay node 100) has a LTE-function and a gNB-function. There is a Uu interface between the MB SR-node (relay node 100) and the MBSR-donor gNB (base station 200). There is also a Uu interface between the MBSR-node (relay node 100) and the UE 30. Note that there is an Xn interface between the MBSR-donor gNB (base station 200) and a gNB 50 and there is an NG interface between the MBSR-donor gNB (base station 200) and a 5G core (5GC) 60.

In particular, in embodiments of the present disclosure, there is also an inter-base station interface (for example, Xn interface) between the MBSR-node (relay node 100) and the MBSR-donor gNB (base station 200). This will be described in detail later.

### <2. Configuration of Relay Node>

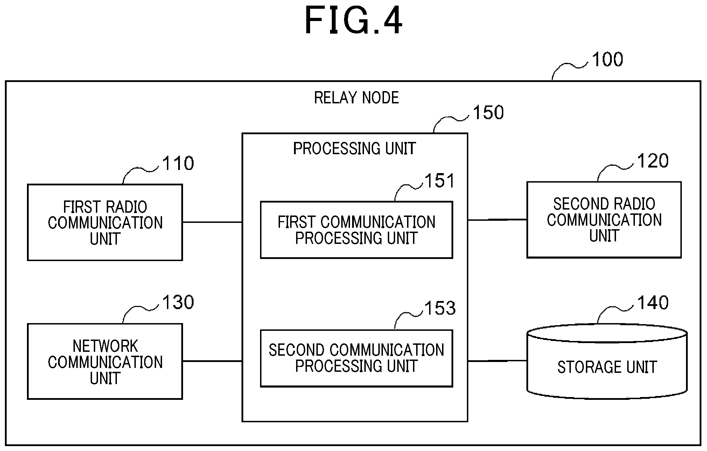

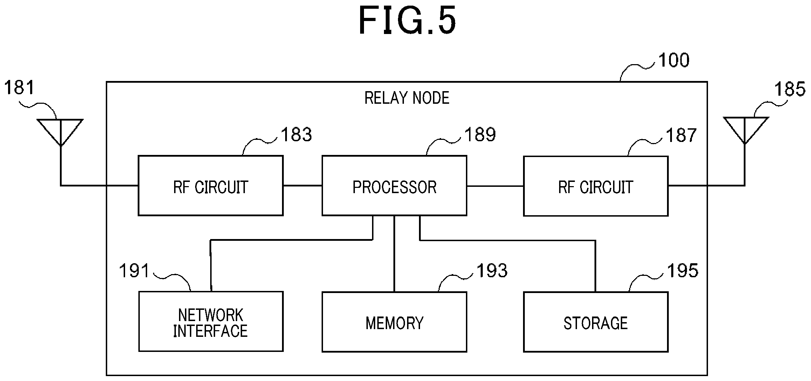

An example of a configuration of the relay node 100 according to embodiments of the present disclosure will be described with reference to FIGS. 4 and 5.

### (1) Functional Configuration

First, an example of a functional configuration of the relay node 100 according to embodiments of the present disclosure will be described with reference to FIG. 4. Referring to FIG. 4, the relay node 100 includes a first radio communication unit 110, a second radio communication unit 120, a network communication unit 130, a storage unit 140, and a processing unit 150.

The first radio communication unit 110 wirelessly transmits and receives signals. For example, the first radio communication unit 110 receives signals from another apparatus and transmits signals to the other apparatus. For example, the other apparatus is the base station 200.

The second radio communication unit 120 wirelessly transmits and receives signals. For example, the second radio communication unit 120 receives signals from another apparatus and transmits signals to the other apparatus. For example, the other apparatus is the UE 30.

The network communication unit 130 receives signals from a network to which the relay node 100 is connected and transmits signals to the network. As an example, as illustrated in FIG. 2, the relay node 100 may be an onboard apparatus that is mounted on the vehicle 10 and the network may be an in-vehicle local area network (LAN). In this case, a variety of sensors (for example, a traveling state sensor and the like), a variety of ECUs (for example, an engine control ECU, a drive assist ECU, and the like), an operation switch, a display apparatus, and the like may be connected to the network in addition to the relay node 100.

The storage unit 140 stores various kinds of information for the relay node 100.

The processing unit 150 provides various functions of the relay node 100. The processing unit 150 includes a first communication processing unit 151 and a second communication processing unit 153. Note that the processing unit 150 may further include another component in addition to these components. That is, the processing unit 150 may also perform an operation other than operations of these components. Specific operations of the first communication processing unit 151 and the second communication processing unit 153 will be described in detail later.

For example, the processing unit 150 (specifically, first communication processing unit 151) communicates with another apparatus (for example, base station 200) via the first radio communication unit 110. For example, the processing unit 150 (specifically, second communication processing unit 153) communicates with another apparatus (for example, UE 30) via the second radio communication unit 120. For example, the processing unit 150 communicates, via the network communication unit 130, with another apparatus connected to the network.

Note that, in a case where the relay node 100 is not connected to the network, the relay node 100 does not have to include the network communication unit 130.

### (2) Hardware Configuration

Next, an example of a hardware configuration of the relay node 100 according to embodiments of the present disclosure will be described with reference to FIG. 5. Referring to FIG. 5, the relay node 100 includes an antenna 181, a radio frequency (RF) circuit 183, an antenna 185, an RF circuit 187, a processor 189, a network interface 191 and a memory 193, and a storage 195.

Each of the antenna 181 and the antenna 185 converts signals into radio waves and emits the radio waves into the air. In addition, each of the antenna 181 and the antenna 185 receives radio waves in the air and converts the radio waves into signals. Each of the antenna 181 and the antenna 185 may each include a transmitting antenna and a receiving antenna or may be a single antenna for transmission and reception. Each of the antenna 181 and the antenna 185 may be directional antennas and may include a plurality of antenna elements.

The RF circuit 183 performs analog processing on signals that are transmitted and received via the antenna 181. The RF circuit 187 performs analog processing on signals that are transmitted and received via the antenna 185. Each of the RF circuit 183 and the RF circuit 187 may include a high-frequency filter, an amplifier, a modulator, a lowpass filter, and the like.

The processor 189 performs digital processing on signals that are transmitted and received via the antenna 181 and the RF circuit 183. In addition, the processor 189 performs digital processing on signals that are transmitted and received via the antenna 185 and the RF circuit 187. Further, the processor 189 also performs processing on signals that are transmitted and received via the network interface 191. The processor 189 may include a plurality of processors or may be a single processor. The plurality of processors may include one or more baseband processors that perform the digital processing and one or more processors that perform other processing.

The network interface 191 is, for example, a network adaptor. The processor 189 communicates, via the network interface 191, with an apparatus connected to the network.

The memory 193 stores a program to be executed by the processor 189, a parameter related to the program, and other various kinds of information. The memory 193 may include at least one of a read only memory (ROM), an erasable programmable read only memory (EPROM), an electrically erasable programmable read only memory (EEPROM), a random access memory (RAM), and a flash memory. The whole or part of the memory 193 may be included in the processor 189.

The storage 195 stores various kinds of information. The storage 195 may include at least one of a solid state drive (SSD) and a hard disc drive (HDD).

The first radio communication unit 110 may be implemented by the antenna 181 and the RF circuit 183. The second radio communication unit 120 may be implemented by the antenna 185 and the RF circuit 187. The network communication unit 130 may be implemented by the network interface 191. The storage unit 140 may be implemented by the storage 195. The processing unit 150 may be implemented by the processor 189 and the memory 193.

Note that, in a case where the relay node 100 is not connected to the network, the relay node 100 does not have to include the network interface 191.

Given the hardware configuration described above, for example, the relay node 100 includes a memory that stores a program and one or more processors that is configured to execute the program to perform operations of the first communication processing unit 151 and the second communication processing unit 153. For example, the memory is the memory 193 and the one or more processors are the processor 189. Note that the program is a program for causing a computer to execute the operations of the first communication processing unit 151 and the second communication processing unit 153.

### <3. Configuration of Base Station>

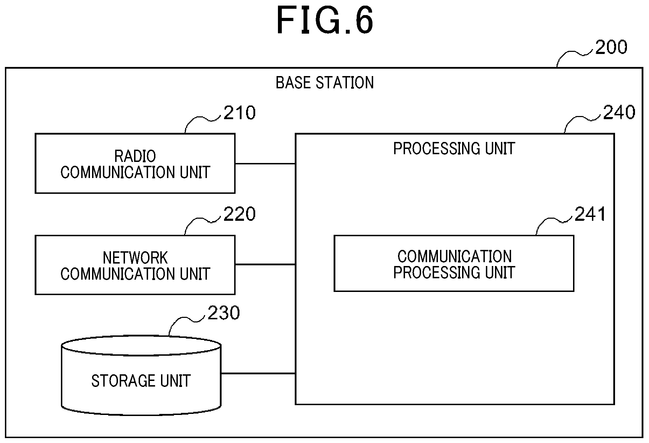

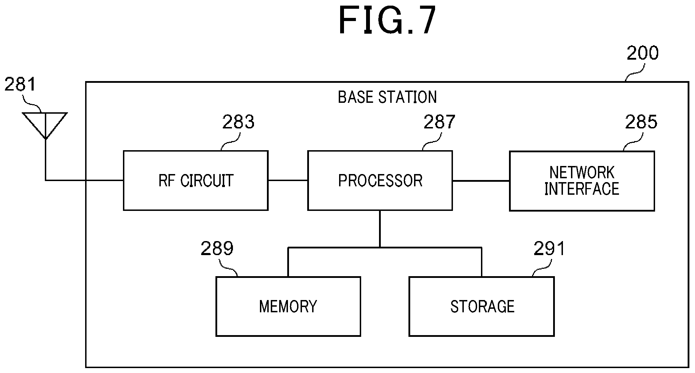

An example of a configuration of the base station 200 according to embodiments of the present disclosure will be described with reference to FIGS. 6 and 7.

### (1) Functional Configuration

First, an example of a functional configuration of the base station 200 according to embodiments of the present disclosure will be described with reference to FIG. 6. Referring to FIG. 6, the base station 200 includes a radio communication unit 210, a network communication unit 220, a storage unit 230, and a processing unit 240.

The radio communication unit 210 wirelessly transmits and receives signals. For example, the radio communication unit 210 receives signals from a UE and transmits signals to the UE.

The network communication unit 220 receives signals from a network and transmits signals to the network.

The storage unit 230 stores various kinds of information for the base station 200.

The processing unit 240 provides various functions of the base station 200. The processing unit 240 includes a communication processing unit 241. Note that the processing unit 240 may further include another component in addition to the communication processing unit 241. That is, the processing unit 240 may also perform an operation other than an operation of the communication processing unit 241. A specific operation of the communication processing unit 241 will be described in detail later.

For example, the processing unit 240 (communication processing unit 241) communicates with a LTE (for example, the LTE 40 or the relay node 100) via the radio communication unit 210. For example, the processing unit 240 communicates with another node (for example, core network node) via the network communication unit 220.

### (2) Hardware Configuration

Next, an example of a hardware configuration of the base station 200 according to embodiments of the present disclosure will be described with reference to FIG. 7. Referring to FIG. 7, the base station 200 includes an antenna 281, an RF circuit 283, a network interface 285, a processor 287, a memory 289, and a storage 291.

The antenna 281 converts signals into radio waves and emits the radio waves into the air. In addition, the antenna 281 receives radio waves in the air and converts the radio waves into signals. The antenna 281 may include a transmitting antenna and a receiving antenna or may be a single antenna for transmission and reception. The antenna 281 may be a directional antenna and may include a plurality of antenna elements.

The RF circuit 283 performs analog processing on signals that are transmitted and received via the antenna 281. The RF circuit 283 may include a high-frequency filter, an amplifier, a modulator, a lowpass filter, and the like.

The network interface 285 is, for example, a network adaptor and transmits signals to a network and receives signals from the network.

The processor 287 performs digital processing on signals that are transmitted and received via the antenna 281 and the RF circuit 283. The processor 287 also performs processing on signals that are transmitted and received via the network interface 285. The processor 287 may include a plurality of processors or may be a single processor. The plurality of processors may include a baseband processor that performs the digital processing and one or more processors that perform other processing.

The memory 289 stores a program to be executed by the processor 287, a parameter related to the program, and other various kinds of information. The memory 289 may include at least one of a ROM, an EPROM, an EEPROM, a RAM, and a flash memory. The whole or part of the memory 289 may be included in the processor 287

The storage 291 stores various kinds of information. The storage 291 may include at least one of an SSD and an HDD.

The radio communication unit 210 may be implemented by the antenna 281 and the RF circuit 283. The network communication unit 220 may be implemented by the network interface 285. The storage unit 230 may be implemented by the storage 291. The processing unit 240 may be implemented by the processor 287 and the memory 289

Part or the whole of the processing unit 240 may be virtualized. In other words, part or the whole of the processing unit 240 may be implemented as a virtual machine. In this case, the part or the whole of the processing unit 240 may operate as a virtual machine on a physical machine (that is, hardware) including a processor, a memory, and the like and a hypervisor.

Given the hardware configuration described above, the base station 200 may include a memory (that is, memory 289) that stores a program and one or more processors (that is, processor 287) capable of executing the program and the one or more processors may execute the program to perform operations of the processing unit 240. The program may be a program for causing the processors to execute the operations of the processing unit 240.

### <4. Operation Examples>

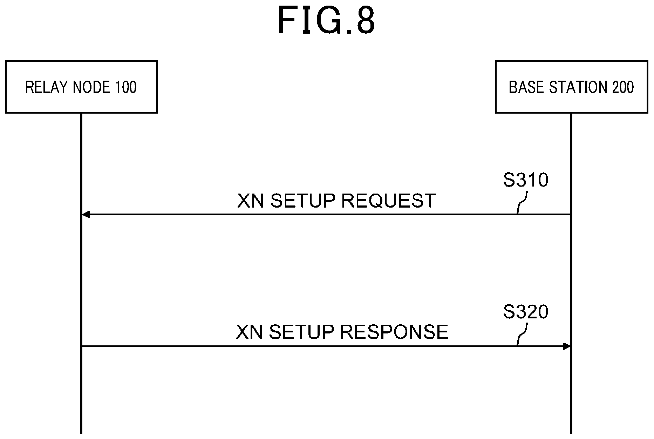

Examples of operations of the relay node 100 and the base station 200 according to embodiments of the present disclosure will be described with reference to FIGS. 8 to 19.

The relay node 100 (first communication processing unit 151) communicates with the base station 200 via a Uu interface as a LTE. In other words, the base station 200 (communication processing unit 241) communicates, via a Uu interface, with the relay node 100 that operates as a UE.

Further, the relay node 100 (second communication processing unit 153) communicates with one or more UEs via a Uu interface as a base station. For example, the one or more UEs include the UE 30.

In particular, the relay node 100 (first communication processing unit 151) communicates with the base station 200 via an inter-base station interface as a base station. In other words, the base station 200 (communication processing unit 241) communicates, via an inter-base station interface, with the relay node 100 that operates as a base station.

This, for example, makes it is possible to perform a handover procedure for a handover of a UE between the base station 200 and the relay node 100. More specifically, for example, it is possible for the relay node 100 and the base station 200 to perform a normal handover procedure via an inter-base station interface.

For example, the inter-base station interface is an Xn interface.

### (1) Setup of Inter-base Station Interface

For example, the relay node 100 (first communication processing unit 151) performs a setup procedure of an inter-base station interface with the base station 200 as a base station. In other words, the base station 200 (communication processing unit 241) performs a setup procedure of an inter-base station interface with the relay node 100 operating as a base station. For example, the setup procedure is an Xn setup procedure.

This allows, for example, the relay node 100 to communicate with the base station 200 via an inter-base station interface (for example, Xn interface).

### - First Example

As a first example, the relay node 100 (first communication processing unit 151) transmits, to the base station 200 as a UE, information indicating that the UE is a relay node (that will be referred to as "relay indication information" below). The base station 200 (communication processing unit 241) receives the relay indication information from the relay node 100 operating as a UE. The relay indication information may indicate that the UE is an NMSR or indicate that the UE is a vehicle mounted relay. The relay node 100 (first communication processing unit 151) may transmit the relay indication information to the base station 200 during a procedure for establishing a connection to the base station 200 or after the procedure. Alternatively, the relay node 100 (first communication processing unit 151) may transmit the relay indication information to the base station 200 in response to the occurrence of first user data.

For example, the base station 200 (communication processing unit 241) performs the setup procedure with the relay node 100 operating as a base station in response to the reception of the relay indication information. As described above, the setup procedure is an Xn setup procedure. Specifically, as illustrated in FIG. 8, the base station 200 (communication processing unit 241) transmits an XN SETUP REQUEST message to the relay node 100 (S310) and the relay node 100 (first communication processing unit 151) receives the XN SETUP REQUEST message from the base station 200. Further, the relay node 100 (first communication processing unit 151) transmits an XN SETUP RESPONSE message to the base station 200 (S320) and the base station 200 (communication processing unit 241) receives the XN SETUP RESPONSE message from the relay node 100.

In this way, the relay indication information may trigger a setup procedure of an inter-base station interface (for example, Xn setup procedure).

### - Second Example

As a second example, the relay node 100 (first communication processing unit 151) may initiate the setup procedure (for example, Xn setup procedure) by itself without transmitting the relay indication information.

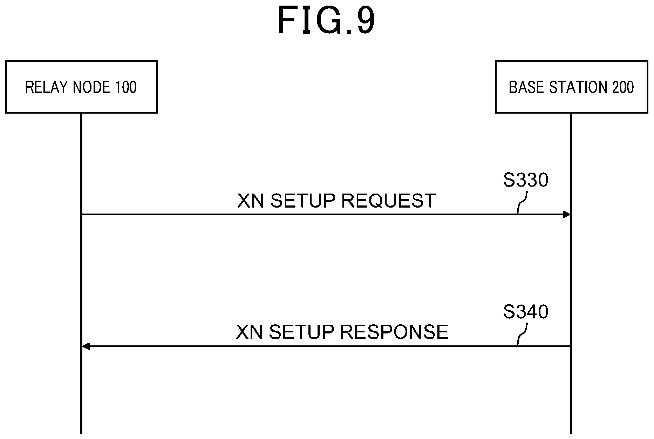

Specifically, as illustrated in FIG. 9, the relay node 100 (first communication processing unit 151) may transmit an XN SETUP REQUEST message to the base station 200 (S330) and the base station 200 (communication processing unit 241) may receive the XN SETUP REQUEST message from the relay node 100. The base station 200 (communication processing unit 241) may transmit an XN SETUP RESPONSE message to the relay node 100 (S340) and the relay node 100 (first communication processing unit 151) may receive the XN SETUP RESPONSE message from the base station 200.

In this way, the relay node 100 may initiate a setup procedure of an inter-base station interface (for example, Xn setup procedure).

### (2) Protocols

### - Uu Interface between Relay Node 100 and UE 30

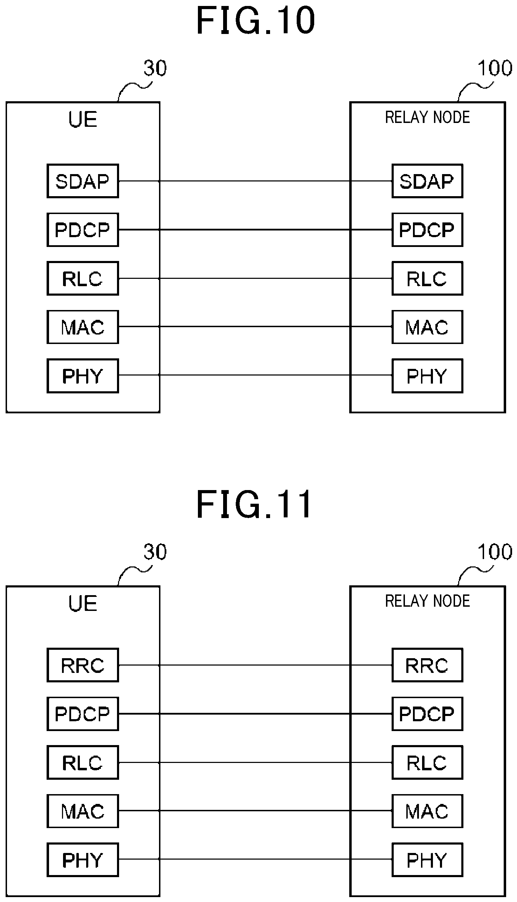

As illustrated in FIG. 10, for example, a user plane protocol stack of a Uu interface between the relay node 100 and the LTE 30 includes protocols of service data adaptation protocol (SDAP), packet data convergence protocol (PDCP), radio link control (RLC), medium access control (MAC), and physical (PHY) layers.

As illustrated in FIG. 11, for example, a control plane protocol stack of a Uu interface between the relay node 100 and the LTE 30 includes protocols of radio resource control (RRC), PDCP, RLC, MAC, and PHY layers.

### - Uu Interface between Relay Node 100 and Base Station 200

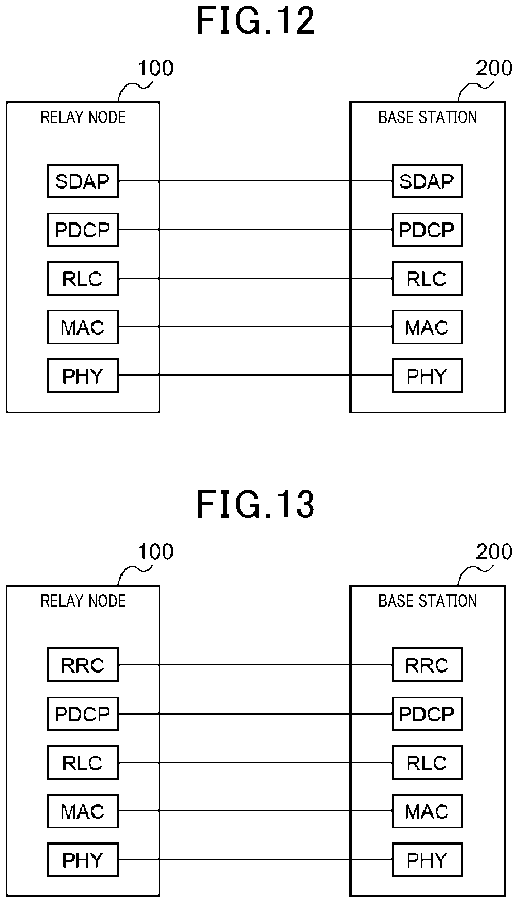

As illustrated in FIG. 12, for example, a user plane protocol stack of a Uu interface between the relay node 100 and the base station 200 includes protocols of SDAP, PDCP, RLC, MAC, and PHY layers.

As illustrated in FIG. 13, for example, a control plane protocol stack of a Uu interface between the relay node 100 and the base station 200 includes protocols of RRC, PDCP, RLC, MAC, and PHY layers.

### - Inter-base Station Interface between Relay Node 100 and Base Station 200

For example, the inter-base station interface includes an inter-base station user plane interface and an inter-base station control plane interface. As described above, for example, the inter-base station interface is an Xn interface and the Xn interface includes an Xn user plane (Xn-U) interface and an Xn control plane (Xn-C) interface.

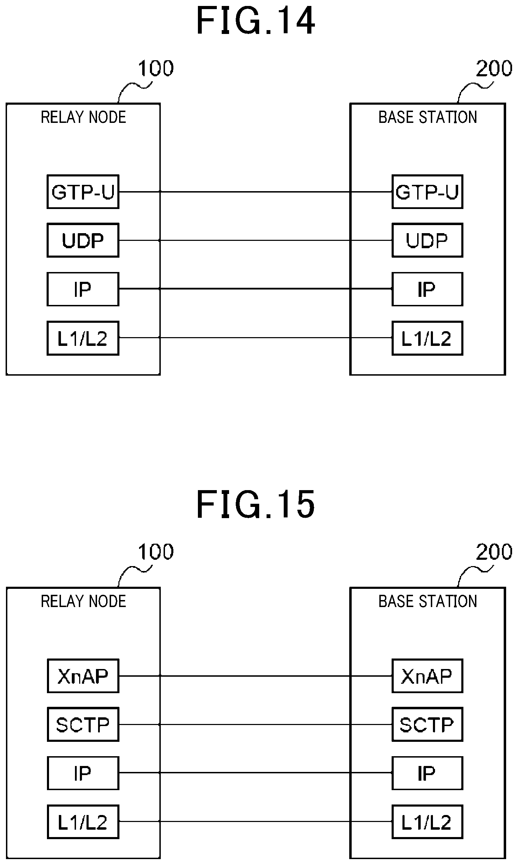

As illustrated in FIG. 14, for example, a protocol stack of an Xn-U interface between the relay node 100 and the base station 200 includes a GTP tunneling protocol for user plane (GTP-U), a user datagram protocol (UDP), and an internet protocol (IP). Further, the protocol stack includes an L1/L2 protocol under the IP. The L1/L2 protocol is, for example, a user plane protocol stack of a Uu interface (see FIG. 12).

As illustrated in FIG. 15, for example, a protocol stack of an Xn-C interface between the relay node 100 and the base station 200 includes an Xn application protocol (XnAP), a stream control transmission protocol (SCTP), and an IP. Further, the protocol stack includes an L1/L2 protocol under the IP. The L1/L2 protocol is, for example, a user plane protocol stack of a Uu interface (see FIG. 12). Note that the XnAP is defined in 3GPP TS 38.423 V16.4.0.

### (3) Handover

For example, the relay node 100 (first communication processing unit 151) performs, via the inter-base station interface (for example, Xn interface), a handover procedure for a handover of a target LTE between the base station 200 and the relay node 100. The base station 200 (communication processing unit 241) also performs the handover procedure via the inter-base station interface (for example, Xn interface).

This, for example, makes it possible to switch a connection to the target UE between the relay node 100 and the base station 200.

### - Handover from Relay Node 100 to Base Station 200

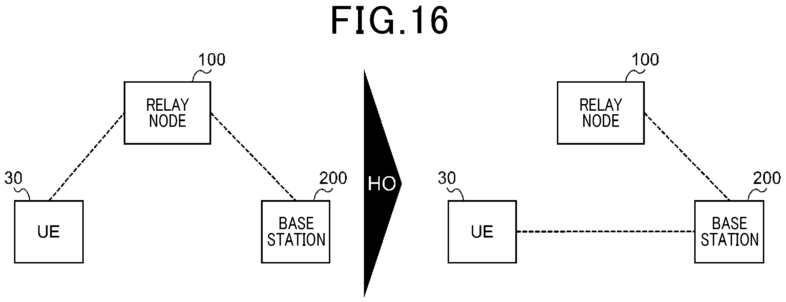

For example, a handover of a target LTE from the relay node 100 to the base station 200 is performed. Referring to the example of FIG. 16, for example, the target UE is the UE 30 and a handover of the UE 30 from the relay node 100 to the base station 200 is performed.

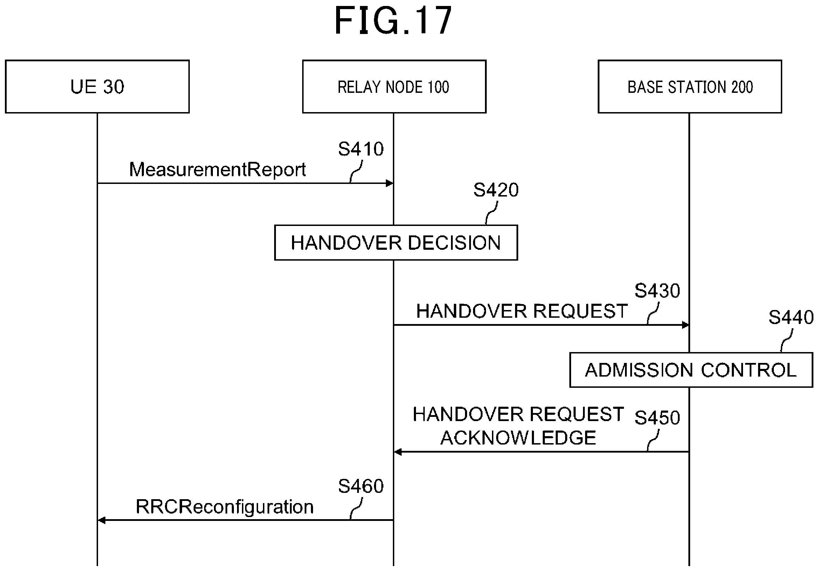

An example of a handover procedure for the handover will be described with reference to FIG. 17. First, the UE 30 transmits a measurement report (MeasurementReport) message to the relay node 100 via a Uu interface (S410). The relay node 100 (second communication processing unit 153) decides a handover of the LTE 30 from the relay node 100 to the base station 200 as a base station based on information included in the measurement report message (S420). The relay node 100 (first communication processing unit 151) transmits a handover request (HANDOVER REQUEST) message to the base station 200 via an inter-base station interface (for example, Xn interface) (S430). The handover request (HANDOVER REQUEST) message is for requesting the handover. The base station 200 (communication processing unit 241) receives the handover request message from the relay node 100 via the inter-base station interface (for example, Xn interface). The base station 200 (communication processing unit 241) performs admission control (S440) and transmits a handover request acknowledge (HANDOVER REQUEST ACKNOWLEDGE) message to the relay node 100 via an inter-base station interface (for example, Xn interface) (S450). The relay node 100 (first communication processing unit 151) receives the handover request acknowledge message from the base station 200 via the inter-base station interface (for example, Xn interface). After that, the relay node 100 (second communication processing unit 153) transmits an RRC reconfiguration (RRCReconfiguration) message to the UE 30 via a Uu interface as a base station (S460). After that, the remaining processing of the handover procedure is performed.

This makes it possible, for example, to switch a connection to the target UE from the relay node 100 to the base station 200.

### - Handover from First Base Station to Second Base Station

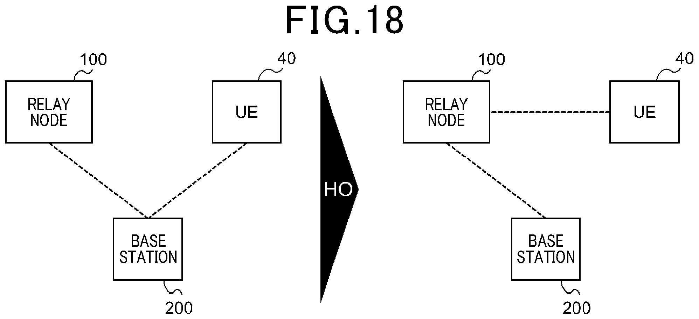

For example, a handover of a target UE from the base station 200 to the relay node 100 is performed. Referring to the example of FIG. 18, for example, the target UE is the UE 40 and a handover of the UE 40 from the base station 200 to the relay node 100 is performed.

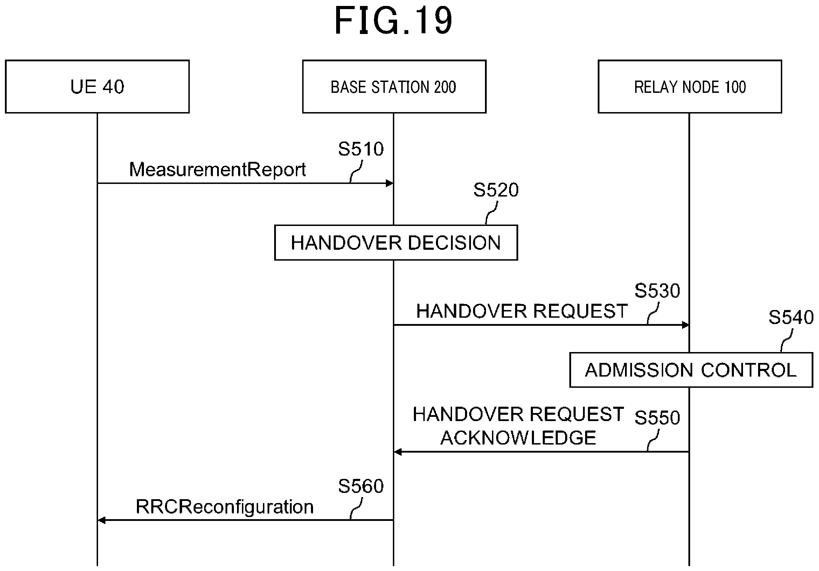

An example of a handover procedure for the handover will be described with reference to FIG. 19. First, the UE 40 transmits a measurement report (MeasurementReport) message to the base station 200 via a Uu interface (S510). The base station 200 (communication processing unit 241) decides a handover of the LTE 40 from the base station 200 to the relay node 100 based on information included in the measurement report message (S520). The base station 200 (communication processing unit 241) transmits, to the relay node 100 via an inter-base station interface (for example, Xn interface), a handover request (HANDOVER REQUEST) message for requesting the handover. The relay node 100 (first communication processing unit 151) receives the handover request message from the base station 200 via the inter-base station interface (for example, Xn interface). The relay node 100 (first communication processing unit 151) performs admission control (S540) and transmits a handover request acknowledge (HANDOVER REQUEST ACKNOWLEDGE) message to the base station 200 via an inter-base station interface (for example, Xn interface) (S550). The base station 200 (communication processing unit 241) receives the handover request acknowledge message from the relay node 100 via the inter-base station interface (for example, Xn interface). After that, the base station 200 (communication processing unit 241) transmits an RRC reconfiguration (RRCReconfiguration) message to the UE 40 via a Uu interface (S560). After that, the remaining processing of the handover procedure is performed.

This makes it possible, for example, to switch a connection to the target UE from the base station 200 to the relay node 100.

### <5. Modification Examples>

First to third modification examples according to embodiments of the present disclosure will be described. Note that two or more of the first to third modification examples may be combined.

### (1) First Modification Example

In the above-described example according to embodiments of the present disclosure, the inter-base station interface is an Xn interface. However, the inter-base station interface according to embodiments of the present disclosure is not limited to this example.

In the second modification example of embodiments of the present disclosure, the inter-base station interface is not an "Xn interface", but may be an interface having another name. As an example, the inter-base station interface may be referred to as a Z 1 interface or a Zn interface.

The inter-base station interface is referred to by the other name, but a protocol stack of the inter-base station interface may include the protocols illustrated in FIGS. 14 and 15 as with the Xn interface. The inter-base station control plane interface may include a control protocol including a procedure similar to that of an XnAP instead of the XnAP. The control protocol may include a setup procedure of an inter-base station interface and a handover procedure. The setup procedure may include the transmission and reception of a setup request message and the transmission and reception of a setup response message as in the examples of FIGS. 8 and 9. The handover procedure may include the transmission and reception of a handover request message and the transmission and reception of a handover request acknowledge message as in the examples of FIGS. 17 and 19.

### (2) Second Modification Example

In the above-described example according to embodiments of the present disclosure, the relay node 100 is an apparatus mountable on a mobile object. Further, for example, the mobile object is a vehicle and the relay node 100 is an onboard apparatus. However, the relay node 100 according to embodiments of the present disclosure is not limited to this example.

In the second modification example of embodiments of the present disclosure, the relay node 100 may be an apparatus other than an onboard apparatus.

The relay node 100 is not an apparatus mountable on a mobile object, but may be a communication module included in the apparatus, or may be a mobile object (for example, vehicle) itself that includes the apparatus.

The mobile object may be not a vehicle but another mobile object. As an example, the mobile object is a flying apparatus.

### (3) Third Modification Example

In the above-described example according to embodiments of the present disclosure, the system 1 is a system compliant with the TSs of 5G or NR. However, the system 1 according to embodiments of the present disclosure is not limited to this example.

In the third modification example of embodiments of the present disclosure, the system 1 may be a system compliant with TSs of next generation (for example, 6G). In this case, a Uu interface according to the third modification example may mean an interface between a base station and a UE in the next generation, and an inter-base station interface according to the third modification example may mean an interface between base stations in the next generation. A setup procedure of an inter-base station interface according to the third modification example may mean a setup procedure of an inter-base station interface in the next generation.

While embodiments of the present disclosure have been described above, the present disclosure is not limited to the embodiments. It will be understood by those skilled in the art that the embodiments are merely examples and various changes can be made without departing from the scope and the spirit of the present disclosure.

For example, steps in a process described in the present specification do not necessarily have to be executed chronologically in the order described in the flowchart or the sequence diagram. For example, steps in a process may be executed in an order different from the order described as the flowchart or the sequence diagram, or may be executed in parallel. In addition, one or more steps in a process may be removed, or one or more further steps may be added to the process.

For example, there may be provided a method including the operations of one or more components of an apparatus described in the present specification, and there may be provided a program for causing a computer to execute the operations of the components. Moreover, there may be provided a non-transitory tangible computer-readable storage medium having stored therein the program. Naturally, such a method, program, and non-transitory tangible computer-readable storage medium are also included in the present disclosure.

For example, in the present disclosure, a user equipment (LTE) may be referred to by another name such as mobile station, mobile terminal, mobile apparatus, mobile unit, subscriber station, subscriber terminal, subscriber apparatus, subscriber unit, wireless station, wireless terminal, wireless apparatus, wireless unit, remote station, remote terminal, remote apparatus, or remote unit.

For example, in the present disclosure, "transmit" may mean performing processing of at least one layer in a protocol stack used for transmission, or physically transmitting signals wirelessly or by wire. Alternatively, "transmit" may mean a combination of performing the processing of the at least one layer and physically transmitting signals wirelessly or by wire. Similarly, "receive" may mean performing processing of at least one layer in a protocol stack used for reception, or physically receiving signals wirelessly or by wire. Alternatively, "receive" may mean a combination of performing the processing of the at least one layer and physically receiving signals wirelessly or by wire. The at least one layer may be regarded as at least one protocol.

For example, in the present disclosure, "obtain/acquire" may mean obtaining/acquiring information from stored information, obtaining/acquiring information from information received from another node, or obtaining/acquiring information by generating the information.

For example, in the present disclosure, "include" and "comprise" do not mean that only listed items are included, but mean that only listed items may be included or a further item may be included in addition to the listed items.

For example, in the present disclosure, "or" does not mean exclusive OR, but means inclusive OR.

Note that the technical features included in the above-described embodiments may be represented as the following features. Naturally, the present disclosure is not limited to the following features.

(Feature 1) A relay node (100) comprising:
a first communication processing unit (151) configured to communicate with a first base station (200) via a Uu interface as a user equipment; and
a second communication processing unit (153) configured to communicate with one or more user equipments (30) via a Uu interface as a second base station,
wherein the first communication processing unit is configured to communicate with the first base station via an inter-base station interface as the second base station.

(Feature 2) The relay node according to Feature 1, wherein the first communication processing unit is configured to perform a setup procedure of the inter-base station interface with the first base station as the second base station.

(Feature 3) The relay node according to Feature 2, wherein
the inter-base station interface is an Xn interface, and
the first communication processing unit is configured to transmit an XN SETUP REQUEST message to the first base station and receive an XN SETUP RESPONSE message from the first base station.

(Feature 4) The relay node according to Feature 2, wherein
the inter-base station interface is an Xn interface, and
the first communication processing unit is configured to receive an XN SETUP REQUEST message from the first base station and transmit an XN SETUP RESPONSE message to the first base station.

(Feature 5) The relay node according to any one of Features 1 to 4, wherein the first communication processing unit is configured to transmit information to the first base station as the user equipment, the information indicating that the user equipment is a relay node.

(Feature 6) The relay node according to any one of Features 1 to 5, wherein the first communication processing unit is configured to perform, via the inter-base station interface, a handover procedure for a handover of a target user equipment between the first base station and the relay node.

(Feature 7) The relay node according to any one of Features 1 to 6, wherein the first communication processing unit is configured to transmit, to the first base station via an inter-base station interface, a handover request message for requesting a handover of a target user equipment (30) from the relay node to the first base station.

(Feature 8) The relay node according to Feature 7, wherein the second communication processing unit is configured to decide the handover as the second base station.

(Feature 9) The relay node according to any one of Features 1 to 8, wherein the first communication processing unit is configured to receive, from the first base station via an inter-base station interface, a handover request message for requesting a handover of a target user equipment (40) from the first base station to the relay node, and transmit a handover request acknowledge message to the first base station via an inter-base station interface.

(Feature 10) The relay node according to any one of Features 1 to 9, wherein the relay node is a mobile object, an apparatus mountable on a mobile object, or a communication module included in an apparatus mountable on a mobile object.

(Feature 11) The relay node according to Feature 10, wherein the mobile object is a vehicle.

(Feature 12) A first base station (200) comprising
a communication processing unit (241) configured to communicate with a relay node (100) that communicates with the first base station via a Uu interface as a user equipment and communicates with one or more user equipments (30) via a Uu interface as a second base station,
wherein the communication processing unit is configured to communicate with the relay node operating as the user equipment via a Uu interface and communicate with the relay node operating as the second base station via an inter-base station interface.

(Feature 13) The first base station according to Feature 12, wherein the communication processing unit is configured to perform a setup procedure of the inter-base station interface with the relay node operating as the second base station.

(Feature 14) The first base station according to Feature 13, wherein the communication processing unit is configured to receive, from the relay node operating as the user equipment, information indicating that the user equipment is a relay node, and perform, in response to reception of the information, the setup procedure with the relay node operating as the second base station.

(Feature 15) The first base station according to any one of Features 12 to 14, wherein the communication processing unit is configured to perform, via the inter-base station interface, a handover procedure for a handover of a target user equipment between the first base station and the relay node.

(Feature 16) The first base station according to any one of Features 12 to 15, wherein the communication processing unit is configured to receive, from the relay node via an inter-base station interface, a handover request message for requesting a handover of a target user equipment (30) from the relay node to the first base station, and transmit a handover request acknowledge message to the relay node via an inter-base station interface.

(Feature 17) The first base station according to any one of Features 12 to 16, wherein the communication processing unit is configured to transmit, to the relay node via an inter-base station interface, a handover request message for requesting a handover of a target user equipment (40) from the first base station to the relay node.

(Feature 18) A method performed by a relay node (100), comprising:
communicating with a first base station (200) via a Uu interface as a user equipment;
communicating with one or more user equipments (30) via a Uu interface as a second base station; and
communicating with the first base station via an inter-base station interface as the second base station.

(Feature 19) A method performed by a first base station (200), comprising
communicating with a relay node (100) that communicates with the first base station via a Uu interface as a user equipment and communicates with one or more user equipments (30) via a Uu interface as a second base station,
wherein the communicating with the relay node includes
   communicating with the relay node operating as the user equipment via a Uu interface, and
   communicating with the relay node operating as the second base station via an inter-base station interface.

(Feature 20) A program for causing a computer to execute operations of:
communicating with a first base station (200) via a Uu interface as a user equipment;
communicating with one or more user equipments (30) via a Uu interface as a second base station; and
communicating with the first base station via an inter-base station interface as the second base station.

(Feature 21) A program for causing a computer to execute an operation of
communicating with a relay node (100) that communicates with a first base station (200) via a Uu interface as a user equipment and communicates with one or more user equipments (30) via a Uu interface as a second base station,
wherein the communicating with the relay node includes
   communicating with the relay node operating as the user equipment via a Uu interface, and
   communicating with the relay node operating as the second base station via an inter-base station interface.

(Feature 22) A non-transitory tangible computer-readable storage medium having stored therein a program for causing a computer to execute operations of:
communicating with a first base station (200) via a Uu interface as a user equipment;
communicating with one or more user equipments (30) via a Uu interface as a second base station; and
communicating with the first base station via an inter-base station interface as the second base station.

(Feature 23) A non-transitory tangible computer-readable storage medium having stored therein a program for causing a computer to execute an operation of
communicating with a relay node (100) that communicates with a first base station (200) via a Uu interface as a user equipment and communicates with one or more user equipments (30) via a Uu interface as a second base station,
wherein the communicating with the relay node includes
   communicating with the relay node operating as the user equipment via a Uu interface, and
   communicating with the relay node operating as the second base station via an inter-base station interface.

## Claims

1. A relay node (100) comprising:
a first communication processing unit (151) configured to communicate with a first base station (200) via a Uu interface as a user equipment; and
a second communication processing unit (153) configured to communicate with one or more user equipments (30) via a Uu interface as a second base station,
wherein the first communication processing unit is configured to communicate with the first base station via an inter-base station interface as the second base station.

2. The relay node according to claim 1, wherein the first communication processing unit is configured to perform a setup procedure of the inter-base station interface with the first base station as the second base station.

3. The relay node according to claim 2, wherein
the inter-base station interface is an Xn interface, and
the first communication processing unit is configured to transmit an XN SETUP REQUEST message to the first base station and receive an XN SETUP RESPONSE message from the first base station.

4. The relay node according to claim 2, wherein
the inter-base station interface is an Xn interface, and
the first communication processing unit is configured to receive an XN SETUP REQUEST message from the first base station and transmit an XN SETUP RESPONSE message to the first base station.

5. The relay node according to any one of claims 1 to 4, wherein the first communication processing unit is configured to transmit information to the first base station as the user equipment, the information indicating that the user equipment is a relay node.

6. The relay node according to any one of claims 1 to 5, wherein the first communication processing unit is configured to perform, via the inter-base station interface, a handover procedure for a handover of a target user equipment between the first base station and the relay node.

7. The relay node according to any one of claims 1 to 6, wherein the first communication processing unit is configured to transmit, to the first base station via an inter-base station interface, a handover request message for requesting a handover of a target user equipment (30) from the relay node to the first base station.

8. The relay node according to claim 7, wherein the second communication processing unit is configured to decide the handover as the second base station.

9. The relay node according to any one of claims 1 to 8, wherein the first communication processing unit is configured to receive, from the first base station via an inter-base station interface, a handover request message for requesting a handover of a target user equipment (40) from the first base station to the relay node, and transmit a handover request acknowledge message to the first base station via an inter-base station interface.

10. The relay node according to any one of claims 1 to 9, wherein the relay node is a mobile object, an apparatus mountable on a mobile object, or a communication module included in an apparatus mountable on a mobile object.

11. The relay node according to claim 10, wherein the mobile object is a vehicle.

12. A first base station (200) comprising
a communication processing unit (241) configured to communicate with a relay node (100) that communicates with the first base station via a Uu interface as a user equipment and communicates with one or more user equipments (30) via a Uu interface as a second base station,
wherein the communication processing unit is configured to communicate with the relay node operating as the user equipment via a Uu interface and communicate with the relay node operating as the second base station via an inter-base station interface.

13. The first base station according to claim 12, wherein the communication processing unit is configured to perform a setup procedure of the inter-base station interface with the relay node operating as the second base station.

14. The first base station according to claim 13, wherein the communication processing unit is configured to receive, from the relay node operating as the user equipment, information indicating that the user equipment is a relay node, and perform, in response to reception of the information, the setup procedure with the relay node operating as the second base station.

15. The first base station according to any one of claims 12 to 14, wherein the communication processing unit is configured to perform, via the inter-base station interface, a handover procedure for a handover of a target user equipment between the first base station and the relay node.
